# EUROPÄISCHE PATENTSCHRIFT

(11) **EP 1 640 831 B1**
(45) Veröffentlichungstag und Bekanntmachung des Hinweises auf die Patenterteilung: **02.04.2008**
(21) Anmeldenummer: 05024676.8
(22) Anmeldetag: 18.10.2002
(51) Int. Cl.: G05B 19/4093, G05B 19/4061, B21D 5/04

(54) **Schwenkbiegemaschine und entsprechendes Steuerverfahren mit automatischer Berechnung der Biegereihenfolge**
Bending machine and bending machine control method
Dispositif de pliage et procédé de commande du dispositif de pliage

(43) Veröffentlichungstag der Anmeldung: 29.03.2006
(62) Teilanmeldung aus: 02023377.1
(73) Patentinhaber: Schechtl Maschinenbau GmbH, 83533 Edling (DE)
(72) Erfinder: Bauer, Franz, 83533 Edling (DE); Schechtl, Alois, 83533 Edling (DE)
(74) Vertreter: Patentanwälte Hofstetter, Schurack & Skora

(56) Entgegenhaltungen:
- EP-A- 0 836 896
- WO-A-92/16319
- US-A- 5 835 684

## Beschreibung

Die vorliegende Erfindung betrifft eine Schwenkbiegemaschine zum Biegen von Blechen mit einer Steuereinrichtung, die über eine Eingabeeinheit bedienbar ist, und die über eine Rechnereinheit verfügt, wobei in die Eingabeeinheit ein gewünschtes Biegeprofil eingegeben werden kann. Ferner betrifft die vorliegende Erfindung ein entsprechendes Verfahren zum Steuern einer Schwenkbiegemaschine.

Schwenkbiegemaschinen dienen zum Herstellen von profilierten Blechwerkstücken, wie sie beispielsweise für Dachrinnen, Hausverkleidungen und dergleichen eingesetzt werden. Bei bekannten Schwenkbiegemaschinen werden die Biegeschritte programmiert, indem die Längen der Profilabschnitte, die Biegewinkel und die Biegereihenfolge manuell eingegeben werden.

Eine derartige Schwenkbiegemaschine ist beispielsweise aus der europäischen Patentanmeldung EP 0 836 896 A2 bekannt. Die dort beschriebene computersteuerbare Schwenkbiegemaschine verfügt über eine übliche Steuereinheit, die mit einem Rechner verbunden ist. Der Rechner ist mit einer auf die Eigenschaften einer Schwenkbiegemaschine ausgerichteten Eingabetastatur und einer Bildschirmanzeige zum Anzeigen einer grafischen Oberfläche versehen, die sowohl in einem Programmiermodus als auch in einem Betriebsmodus proportional den Biegevorgang darstellt. Dies ist für den Bediener hilfreich, um den programmierten Biegevorgang durchzuführen. Das Programmieren des Biegevorgangs ist jedoch verhältnismäßig aufwändig und für ungeschultes Bedienpersonal vielfach unmöglich.

Weiterhin beschreibt die Patentschrift US 5 835 684 A1 eine Biegemaschine mit einem Biegereihenfolgeplaner. Damit soll eine Biegereihenfolge geplant werden können, mit der sich eine Kollision zwischen Werkstück und Werkzeug während des Prozesses vermeiden lässt.

Die Aufgabe der vorliegenden Erfindung besteht somit darin, das Programmieren einer computergesteuerten Schwenkbiegemaschine zu vereinfachen.

Erfindungsgemäß wird diese Aufgabe gelöst durch den Gegenstand des Anspruchs 1, wobei eine Schwenkbiegemaschine zum Biegen von Blechen mit einer Steuereinrichtung versehen ist, die über eine Eingabeeinheit bedienbar ist, und die über eine Rechnereinheit verfügt, wobei in die Eingabeeinheit ein gewünschtes Biegeprofil eingebbar ist, und ferner durch die Rechnereinheit für ein eingegebenes, gewünschtes Biegeprofil unter Berücksichtigung der Geometrie von Komponenten der Schwenkbiegemaschine eine Biegereihenfolge eines Blechs berechenbar ist, so dass es zu einer vorgebbaren zulässigen Verbiegung des zu bearbeitenden Blechs bei einer Kollision kommt.

Entsprechend ist erfindungsgemäß auch vorgesehen ein Verfahren zum Steuern einer Schwenkbiegemaschine durch Eingeben eines gewünschten Biegeprofils in eine Eingabeeinheit der Schwenkbiegemaschine und automatisches oder halbautomatisches Berechnen einer Biegereihenfolge eines Blechs für das eingegebene gewünschte Biegeprofil unter Berücksichtigung der Geometrie von Komponenten der Schwenkbiegemaschine, so dass es zu einer vorgebbaren zulässigen Verbiegung des zu bearbeitenden Blechs bei einer Kollision kommt.

Vorzugsweise umfasst die Eingabeeinheit einen sogenannten Touch Screen, bei dem die Eingaben über Berührungen des Bildschirms möglich sind. Hierzu können beispielsweise die Endpunkte und Biegpunkte eines Biegeprofils durch Antippen des Touch Screens eingegeben werden. Somit ist es beispielsweise möglich, auf ein Blatt Papier ein Profil zu skizzieren, dieses an den Touch Screen zu halten und die Endpunkte und Biegepunkte mit einem Finger durch das Papier auf den Touch Screen zu drücken, wodurch am Bildschirm das Profil durch die Berührungspunkte nachgezeichnet wird. Damit kann mit einfachen Mitteln ein gewünschtes Biegeprofil eingegeben, gesucht und ausgewählt werden.

Alternativ oder zusätzlich kann die Eingabeeinheit auch einen Scanner umfassen, mit dem beispielsweise eine CAD-Grafik eingescannt und somit ein gewünschtes Biegeprofil eingegeben werden kann. Ebenso kann natürlich eine Schnittstelle an der Schwenkbiegemaschine vorgesehen sein, über die von anderen Einrichtungen, z.B. dem Internet, Biegeprofile eingegeben werden können.

Vorzugsweise kann für ein derart eingegebenes, gewünschtes Biegeprofil mit der Rechnereinheit eine Biegereihenfolge automatisch oder teilautomatisch unter Berücksichtigung der Geometrie der Schwenkbiegemaschine berechnet werden. Damit kann der Programmiervorgang der Schwenkbiegemaschine auf das Eingeben eines Biegeprofils reduziert werden.

Vorteilhafterweise schlägt die Rechnereinheit auch automatisch Werkzeuge für eine Ober- und Unterwange der Schwenkbiegemaschine vor. Hierzu werden nicht nur die Biegewinkel und Biegeradien des Profils berücksichtigt, sondern auch mögliche Kollisionen des Blechs mit den Werkzeugen. So kann es beispielsweise möglich sein, dass für ein gewünschtes Biegeprofil ein speziell geformtes Werkzeug einzusetzen ist.

Vorteilhafterweise wird die Biegereihenfolge durch eine Versuch-Irrtum-Methode berechnet. Demnach werden in einer Simulation die Biegeschritte beginnend von einem beliebigen Ausgangspunkt soweit durchgeführt, bis es gegebenenfalls zu einer Kollision des gebogenen Blechs mit einer Komponente der Schwenkbiegemaschine kommt. Im Fall einer Kollision können ein oder mehrere Biegeschritte zurückgenommen und die Simulation der Biegung an einer anderen Stelle des Blechs fortgesetzt werden. Somit muss der Biegevorgang nicht komplett von vorne berechnet werden.

Erfahrene Fachleute erkennen unter Umständen, dass ein Biegeschritt durchgeführt werden kann, obwohl es zu einer Kollision kommt oder gekommen ist. Hinsichtlich der Automatisierung kann demnach bei einer Kollision eine zulässige maximale Verbiegung in Abhängigkeit der Materialart, der Materialstärke und/oder der Länge eines bereits gebogenen Blechabschnitts halbautomatisch oder automatisch vorgegeben werden.

Ein weiterer Freiheitsgrad für Vermeidung von Kollisionen ist die Wahl eines geeigneten Biegewerkzeugs der Schwenkbiegemaschine. Auch dieser Vorgang lässt sich automatisieren, indem eine bestimmte Form des Werkzeugs an der Biege- oder Oberwange der Schwenkbiegemaschine automatisch unter Berücksichtigung von Kollisionen und zulässigen Verbiegungen automatisch vorgeschlagen wird.

Die vorliegende Erfindung wird nun anhand der beigefügten Zeichnungen näher erläutert, in denen zeigen:
- Figur 1: eine schematische, perspektivische Darstellung einer computersteuerbaren Schwenkbiegemaschine;
- Figur 2: eine Querschnittsansicht durch ein Arbeitswerkzeug mit eingelegtem, bearbeiteten Blech;
- Figur 3: eine Ansicht auf eine Eingabeeinheit zur Auswahl eines Biegeprofils; und
- Figur 4: eine Querschnittsansicht durch ein Arbeitswerkzeug mit eingelegtem gebogenen Blech, das zu einer Kollision führt.

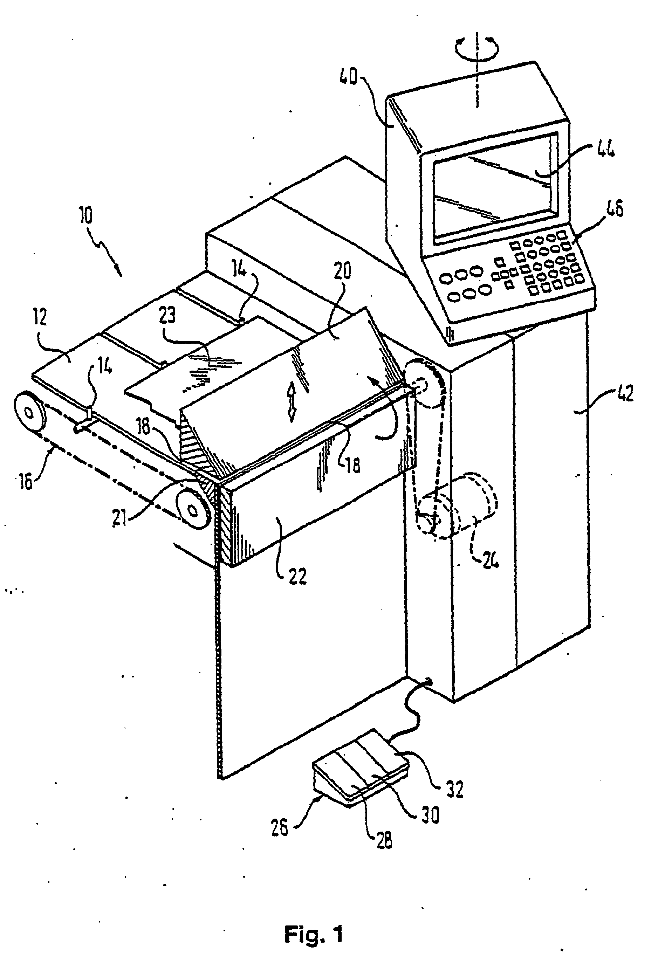

Die nachfolgenden Ausführungsbeispiele stellen bevorzugte Ausführungsformen der vorliegenden Erfindung dar. Zum Verständnis der erfindungsgemäßen Ausführungsform wird jedoch zunächst eine konkrete Biegemaschine anhand der Figuren 1 bis 3 näher erläutert.

In Figur 1 ist lediglich schematisch und der besseren Verständlichkeit halber grob perspektivisch eine Schwenkbiegemaschine 10 dargestellt. Ein Blech 23 aus beliebigem Material wie Eisen, Zink, Aluminium, Kupfer oder entsprechenden Legierungen, wie sie handwerklich oder industriell durch Umkanten zu verformen sind, wird auf einem Tisch 12 mit seiner rückwärtigen Kante vor Vorschubfingern 14 abgelegt. Diese mit einem Antrieb 16 verbundenen Vorschubfinger 14 können das Blech um ein eingestelltes Maß, den "Tiefenanschlag", in Richtung auf einen Schlitz 18 sehr genau verschieben, so dass der abzukantende Streifen des Blechs 23 durch den Schlitz hindurchragt. Von einem nicht dargestellten Antrieb kann eine Klemmwange oder Oberwange 20 gehoben oder gesenkt werden. Mit dieser Oberwange 20 wird das Blech gegen ein Widerlager beziehungsweise eine Unterwange 21 festgehalten und eine Biegewange 22 schwenkt, angetrieben von einem Motor 24, um den gewünschten oder eingestellten Biegewinkel B, um den Streifen des Blechs 23 gegenüber dem Restblech abzukanten.

Im nicht rechnergestützten System wird die Maschine über einen Fußschalter 26 mit drei Tasten 28, 30 und 32 betätigt.

Wird beispielsweise die Taste 28 halb gedrückt, bewegt sich die Klemmwange 20 nach unten und schließt langsam den Schlitz 18. Wird die Taste 28 ganz gedrückt, kann diese Schließbewegung in jeder Stellung gehalten werden. Mit der Taste 30 kann in ähnlicher Weise die Biegewange 22 von Bediener geschwenkt und stillgesetzt werden, während die Taste 32 beispielsweise für das Öffnen der Klemmwange 20 zu betätigen ist.

Die Maschine 10 ist über einen Schaltkasten 42 mit einem Rechner 40 verbunden. Der Rechner 40 ist mit einem Bildschirm 44 versehen, der eine grafische Oberfläche anzeigt. Bedient wird der Rechner 40 über ein Bedienfeld 46.

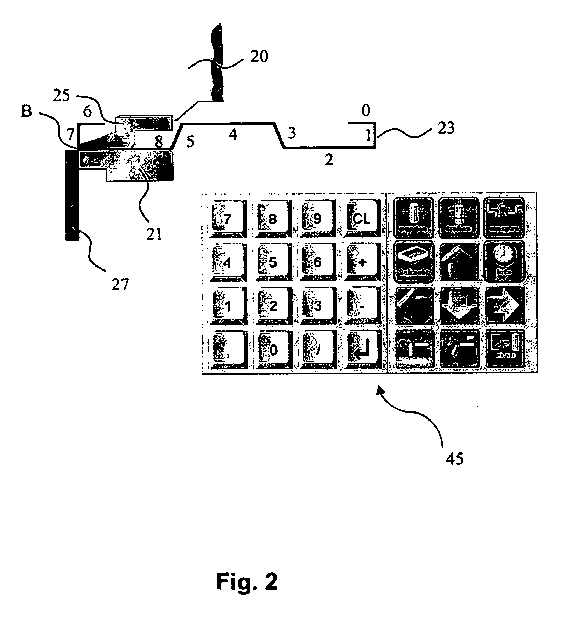

In Figur 2 sind typische Arbeitswerkzeuge der Schwenkbiegemaschine im Querschnitt im Detail dargestellt. Diese Ansicht wird dem Bediener der Schwenkbiegemaschine auch während des Biegevorgangs auf dem Bildschirm 44 präsentiert. Das Blech 23 liegt auf dem Widerlager beziehungsweise der Unterwange 21 auf. An die Oberwange 20 ist ein Werkzeug beziehungsweise eine Oberwangenschiene 25 montiert, die dann das Blech 23 gegen die Unterwange 21 drückt.

Eine Biegeschiene 27 ist um einen Biegepunkt B schwenkbar. Sie ist an die nicht dargestellte Biegewange 22 montiert. Das Blech 23 wird mit Hilfe der an dem Biegepunkt B anliegenden Stirnseite der Biegeschiene 27 gebogen.

In dem in Figur 2 dargestellten Fall ist das Blech 23 bereits in mehrere Blechabschnitte gebogen. Die einzelnen Blechabschnitte sind mit Ziffern von 0 bis 8 gekennzeichnet, woran auch die Biegereihenfolge erkannt werden kann.

Die Darstellung gemäß Figur 2 zeigt entweder den tatsächlichen Biegezustand des Blechswerts während eines Biegevorgangs oder aber einen entsprechenden, am Rechner 40 simulierten Biegezustand. Darüber hinaus zeigt die Bildschirmgrafik von Fig. 2 ein auf dem als Touch Screen ausgestalteten Bildschirm 44 ein Bedienfeld 45.

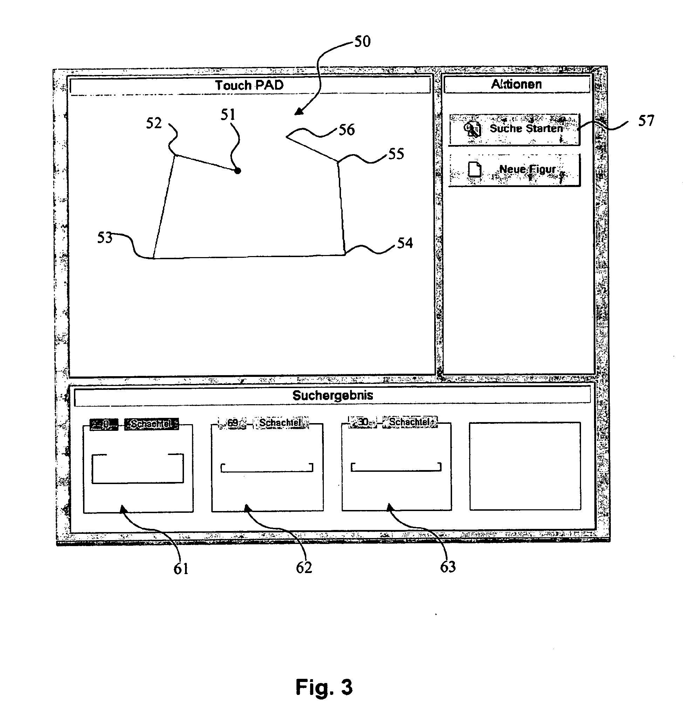

Figur 3 zeigt eine Bildschirmdarstellung eines Touch Screens zur Eingabe eines gewünschten Biegeprofils. Die Eingabe erfolgt mittels Antippen des Touch Screens. Zunächst wird ein Endpunkt 51 eines gewünschten Biegeprofils 50 eingegeben. Bei Berühren des Bildschirms an der Stelle 52 zeichnet der Rechner 40 automatisch das dazwischen liegende Profilstück. In gleicher Weise werden die weiteren Biegepunkte 53, 54 und 55 und schließlich der zweite Endpunkt 56 eingegeben. Nach Eingabe des zweiten Endpunkts 56 wird die Starttaste 57 gedrückt woraufhin der Rechner in einer Datenbank nach ähnlichen Profilen sucht. Die in der Datenbank ermittelten, dem gewünschten Biegeprofil ähnlich kommenden Biegeprofile 61, 62, und 63 werden auf dem Bildschirm 44 grafisch dargestellt.

Aus der Datenbank können nach vorgegebenen Kriterien beispielsweise diejenigen Profile vorgeschlagen werden, die die gleiche oder eine ähnliche Anzahl an Biegungen besitzen. Es können aber auch Profile vorgeschlagen werden, bei denen nur die markantesten Biegungen denen des eingegebenen Profils 50 entsprechen.

Mit Cursortasten oder beispielsweise einer Maus wird das zu verwendende Biegeprofil aus den vorgeschlagenen Profilen 61 bis 63 ausgewählt.

Falls der Rechner aus der Datenbank kein dem eingegebenen Profil 50 ähnliches Biegeprofil vorschlagen kann, wird unmittelbar das an dem Touch Screen eingegebene Profil 50 verwendet und für den Biegvorgang aufbereitet. Dies bedeutet, dass die Biegereihenfolge, die in der Datenbank zu jedem Biegeprofil hinterlegt ist, ermittelt werden muss. Dies findet gemäß der vorliegenden Erfindung automatisch statt. Hierzu wird eine Versuch-Irrtum-Methode angewandt.

Die Versuch-Irrtum-Methode wird an dem Beispiel von Figur 3 erläutert. Hierzu wird angenommen, dass die Profile 61 bis 63 in der Datenbank nicht ermittelt werden konnten. Zunächst werden für das dargestellte Profil in einer Simulation die Biegungen 52, 53 und 54 in der angegebenen Reihenfolge durchgeführt. Anschließend wird auch die Biegung 55 vollzogen, wobei das Blech zwischen der Biegung 55 und dem zweiten Endpunkt 56 eingespannt ist. Der Rechner 40 registriert, dass es bei der Biegung 55 zu einer Kollision des Blechs mit der Oberwange 20 kommen würde. Daher nimmt der Rechner in seiner Simulation neben dem gegebenenfalls nicht ausführbaren Kollisionsschritt 55 auch die Biegung 54 zurück. Aufgrund dieses "Irrtums" versucht der Rechner nun, die Biegung 55 vor der Biegung 54 auszuführen, was schließlich auch zum gewünschten Ziel möglichst ohne Kollision führt.

Auf diese Art und Weise können für beliebige Biegeprofile die Biegereihenfolgen ermittelt werden. Dabei können im Falle einer Kollision auch sämtliche Biegeschritte zurückgenommen werden. Zur Ermittlung der Biegereihenfolge kann es auch notwendig sein, das Blech entsprechend umzuspannen, wodurch sich die Anzahl der Versuche entsprechend erhöht.

Zur Vermeidung von Kollisionen kann auch versucht werden, ein entsprechend geformtes Biegewerkzeug 25, 27 für die Oberwange 20 und/oder die Biegewange 22 zu finden. Hierzu sind die Formen von Biegewerkzeugen auch in einer Datenbank hinterlegt.

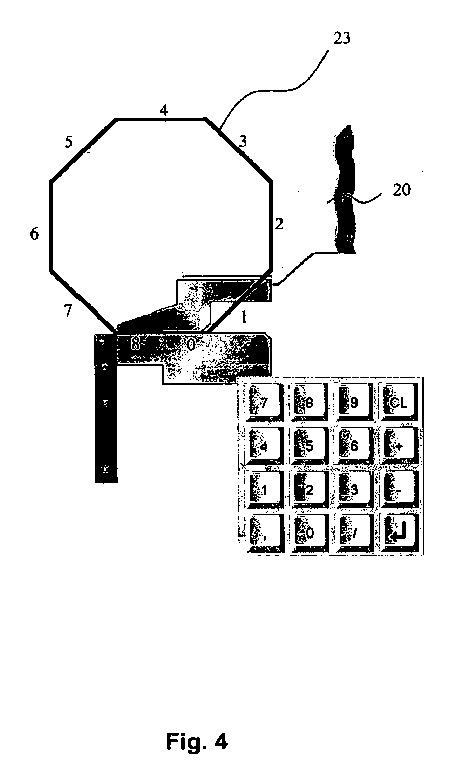

Figur 4 zeigt eine Querschnittsansicht durch das Arbeitswerkzeug einer Schwenkbiegemaschine mit der ein achteckförmiges Profil gebogen wurde. In der Simulation durchdringt das Blech 23 in seinem gebogenen Zustand die Oberwange 20. Diesen Fall interpretiert der Rechner 40 üblicherweise als Kollisionsfall. Der Fachmann erkennt jedoch, dass ein derartiges Profil trotz dieser Kollision mit der Schwenkbiegemaschine hergestellt werden kann. Der zuerst gebogene Teil des Blechs rollt sich nämlich an der Oberfläche der Oberwange 20 schneckenförmig nach innen. Sobald das fertig gebogene Blech 23 aus der Schwenkbiegemaschine entnommen wird, federt der nach innen gedrückte Teil des Blechs nach außen, wodurch ein exaktes, achteckiges Blechprofil entsteht. Dies bedeutet, dass Kollisionsfälle den Biegevorgang nicht von vorneherein unmöglich machen. Vielmehr können auch die Federeigenschaften des Blechs ausgenutzt werden. Dies wird erfindungsgemäß auch bei der automatischen Bestimmung der Biegereihenfolge ausgenutzt. So kann bei der Simulation des Biegevorgangs auch die Materialart, die Materialstärke und die Länge eines federnd verformten Blechstücks berücksichtigt werden. Das in Figur 4 dargestellte achteckförmige Profil kann beispielsweise mit einem 0,5 mm starken ChromStahl-Blech nicht aber mit einem 2 mm starken Aluminium-Blech gebogen werden. Das Aluminium besitzt insbesondere nicht bei dieser Wandstärke die hinreichenden Federeigenschaften, dass es bei der Kollision nicht bleibend verformt werden würde.

Bei der Simulation können die Verformungen durch einfache Näherungen für eine Materialart und -stärke beispielsweise linear abhängig von der Länge des Blechsstücks vom Kollisionspunkt zum Biegepunkt als zulässig oder unzulässig eingestuft werden. Falls genügend Rechnerkapazität zur Verfügung steht, können derartige Einschätzungen aber auch über komplexe Biegegleichungen erfolgen.

## Patentansprüche

1. Schwenkbiegemaschine zum Biegen von Blechen mit
einer Steuereinrichtung (42), die über eine Eingabeeinheit bedienbar ist, und die über eine Rechnereinheit (40) verfügt, wobei in die Eingabeeinheit ein gewünschtes Biegeprofil (50) eingebbar ist,
**dadurch gekennzeichnet, dass**
die Rechnereinheit (40) derart programmiert ist, dass für ein eingegebenes, gewünschtes Biegeprofil (50) unter Berücksichtigung der Geometrie von Komponenten der Schwenkbiegemaschine eine Biegereihenfolge eines Blechs (23) berechenbar ist, so dass es zu einer vorgebbaren zulässigen Verbiegung des zu bearbeitenden Blechs bei einer Kollision kommt.

2. Schwenkbiegemaschine nach Anspruch 1, wobei die Biegereihenfolge durch eine Versuch-Irrtum-Methode berechenbar ist.

3. Schwenkbiegemaschine nach Anspruch 1 oder 2, wobei mit der Rechnereinheit (40) die Biegereihenfolge in einer Simulation derart festlegbar ist, dass für den Fall einer Kollision ein oder mehrere Biegeschritte zurückgenommen werden und die Biegung an einer anderen Stelle des Blechs (23) fortgesetzt wird.

4. Schwenkbiegemaschine nach einem der Ansprüche 1 bis 3, wobei bei einer Kollision eine maximal zulässige Verbiegung in Abhängigkeit der Materialart, der Materialstärke und/oder der Länge eines bereits gebogenen Blechabschnitts halbautomatisch oder automatisch vorgebbar ist.

5. Schwenkbiegemaschine nach einem der Ansprüche 1 bis 4, wobei Biegewerkzeuge (25, 27) der Schwenkbiegemaschine automatisch vorschlagbar sind.

6. Verfahren zum Steuern einer Schwenkbiegemaschine durch
Eingeben eines gewünschten Biegeprofils (50) in eine Eingabeeinheit der Schwenkbiegemaschine,
**gekennzeichnet durch**
automatisches oder halbautomatisches Berechnen einer Biegereihenfolge eines Blechs (23) für das eingegebene gewünschte Biegeprofil (50) unter Berücksichtigung der Geometrie von Komponenten der Schwenkbiegemaschine, so dass es zu einer vorgebbaren zulässigen Verbiegung des zu bearbeitenden Blechs bei einer Kollision kommt.

7. Verfahren nach Anspruch 6, wobei die Biegereihenfolge durch eine Versuch-Irrtum-Methode berechnet wird.

8. Verfahren nach Anspruch 6 oder 7, wobei zur Festlegung der Biegereihenfolge diese simuliert wird und für den Fall einer Kollision ein oder mehrere Biegeschritte zurückgenommen und die Biegung an einer anderen Stelle des Blechs (23) fortgesetzt wird.

9. Verfahren nach einem der Ansprüche 6 bis 8, wobei bei einer Kollision eine maximal zulässige Verbiegung in Abhängigkeit der Materialart, der Materialstärke und/oder der Länge eines bereits gebogenen Blechabschnitts halbautomatisch oder automatisch vorgegeben wird.

10. Verfahren nach einem der Ansprüche 6 bis 9, wobei ein Biegewerkzeug (25, 27) der Schwenkbiegemaschine automatisch anhand eines auszuführenden Biegeprofils unter Berücksichtigung von Kollisionen und Verbiegungen vorgeschlagen wird.

## Claims

1. Swivel bending machine for bending sheets, including
a control means (42) operable through an input unit, which disposes of a computer unit (40), wherein a desired bending profile (50) can be input into the input unit,
**characterized in that**
the computer unit (40) is programmed such that a bending order of a sheet (23) can be calculated for an inputted, desired bending profile (50) considering the geometry of components of the swivel bending machine, such that presettable allowed bending of the sheet to be processed occurs upon collision.

2. Swivel bending machine according to claim 1, wherein the bending order can be calculated by a trial and error method.

3. Swivel bending machine according to claim 1 or 2, wherein the bending order can be determined with the computer unit (40) in a simulation such that in event of collision one or more bending steps can be cancelled and bending is continued in another position of the sheet (23).

4. Swivel bending machine according to anyone of claims 1 to 3, wherein upon collision maximum allowed bending depending on the material type, the material thickness and/or the length of an already bent sheet section can be preset semi-automatically or automatically.

5. Swivel bending machine according to anyone of claims 1 to 4, wherein bending tools (25, 27) of the swivel bending machine can be automatically proposed.

6. Method for controlling a swivel bending machine by
inputting a desired bending profile (50) into an input unit of the swivel bending machine,
**characterized by**
automatically or semi-automatically calculating a bending order of a sheet (23) for the inputted desired bending profile (50) considering the geometry of components of the swivel bending machine such that presettable allowed bending of the sheet to be processed occurs upon collision.

7. Method according to claim 6, wherein the bending order is calculated by a trial and error method.

8. Method according to claim 6 or 7, wherein the bending order is simulated for determining the same, and in the event of collision one or more bending steps are cancelled and bending is continued in another position of the sheet (23).

9. Method according to anyone of claims 6 to 8, wherein upon collision maximum allowed bending depending on the material type, the material thickness and/or the length of an already bent sheet section is preset semi-automatically or automatically.

10. Method according to anyone of claims 6 to 9, wherein a bending tool (25, 27) of the swivel bending machine is automatically proposed by way of a bending profile to be performed considering collisions and bendings.

## Revendications

1. Machine à plier oscillante pour la tôle équipée d'un
dispositif de commande (42) actionnable via une unité d'entrée et disposant d'une unité de calcul (40), offrant la possibilité d'entrer un profil de pliage souhaité (50) par le biais de l'unité d'entrée,
**caractérisée en ce que**
l'unité de calcul (40) est programmée de manière à permettre de calculer une série de pliages d'une tôle (23) à usiner pour un profil de pliage souhaité, prédéfini (50), en considérant la géométrie des composants de la machine à plier oscillante, de manière à obtenir, en cas de collision, un pliage autorisé, prédéfini de la tôle.

2. Machine à plier oscillante conformément à la revendication 1, la série de pliages pouvant être calculée en utilisant la méthode essai-erreur.

3. Machine à plier oscillante conformément à l'une des revendications 1 ou 2, la série de pliages pouvant être prédéfinie dans le cadre d'une simulation à l'aide de l'unité de calcul (40), de façon à pouvoir, en cas de collision, retirer un ou plusieurs pliages pour que le pliage se poursuive à un autre endroit de la tôle (23) à usiner.

4. Machine à plier oscillante conformément à l'une des revendications 1 à 3, permettant l'entrée, automatique ou semi-automatique, d'un pliage maximal autorisé en cas de collision, correspondant au type et à l'épaisseur du matériau, et/ou à la longueur d'une section de tôle déjà pliée.

5. Machine à plier oscillante conformément à l'une des revendications 1 à 4 sur laquelle les outils de pliage (25, 27) peuvent être proposés automatiquement.

6. Procédé de commande d'une machine à plier oscillante en
entrant un profil de pliage souhaité (50) par le biais d'une unité d'entrée de la machine à plier oscillante,
**caractérisé en ce**
**qu'**une série de pliage d'une tôle (23) à usiner est calculée de façon automatique ou semi-automatique pour le profil de pliage entré souhaité (50) en considérant la géométrie des composants de la machine à plier oscillante de manière à obtenir, en cas de collision, le pliage autorisé prédéfini de la tôle à usiner.

7. Procédé conformément à la revendication 6, dans lequel la série de pliages est calculée selon la méthode essai-erreur.

8. Procédé conformément aux revendications 6 ou 7, dans lequel la série de pliage est simulée pour être définie, et pour pouvoir, en cas de collision, retirer un ou plusieurs pliages et poursuivre le pliage à un autre endroit de la tôle (23) à usiner.

9. Procédé conformément à l'une des revendications 6 à 8, dans lequel en cas de collision, le pliage maximal autorisé correspondant au type et à l'épaisseur du matériau et/ou à la longueur d'une section de tôle déjà pliée, est prescrit automatiquement ou semi-automatiquement.

10. Procédé conformément à l'une des revendications de 6 à 9, dans laquelle un outil de pliage (25, 27) de la machine à plier oscillante est proposé automatiquement à l'aide d'un profil de pliage à exécuter compte tenu des collisions et pliages.
